# EUROPEAN PATENT APPLICATION

(11) **EP 4 845 269 A1**
(43) Date of publication of application: **25.11.2026**
(21) Application number: 25747671.3
(22) Date of filing: 21.01.2025
(51) Int. Cl.: H04W 72/0453

(54) **COMMUNICATION METHOD AND COMMUNICATION APPARATUS**

(30) Priority: 30.01.2024 CN 202410137461
(71) Applicant: Huawei Technologies Co., Ltd., Shenzhen, Guangdong 518129 (CN)
(72) Inventor: NING, Boyu, Shenzhen, Guangdong 518129 (CN); LIU, Fengwei, Shenzhen, Guangdong 518129 (CN); FAN, Bo, Shenzhen, Guangdong 518129 (CN); YUAN, Shitong, Shenzhen, Guangdong 518129 (CN); JIANG, Bing, Shenzhen, Guangdong 518129 (CN)
(74) Representative: Huawei European IPR
(86) International application number: PCT/CN2025/073785
(87) International publication number: WO 2025/162099

(57) **Abstract**

This application provides a communication method and a communication apparatus applied to the field of wireless communication. In the technical solutions provided in this application, after determining first information, a terminal may send the first information to a network device. The first information is used to determine a first power aggregation resource, where the first power aggregation resource is used to aggregate power of a signal sent by the network device to the terminal, and the first power aggregation resource is a partial frequency domain resource of a CC of the terminal. According to the technical solutions provided in this application, the network device may determine the first power aggregation resource based on the first information, and aggregate power to the first power aggregation resource, thereby improving an effect of increasing a data transmission rate of a target terminal.

## Description

This application claims priority to Chinese Patent Application No. 202410137461.7, filed with the State Intellectual Property Office of China on January 30, 2024, and entitled "Communication Method and Communication Apparatus," which is incorporated herein by reference in its entirety.

### TECHNICAL FIELD

This application relates to the field of wireless communications, and in particular, to a communication method and a communication apparatus.

### BACKGROUND

There is a propagation loss during the transmission of a wireless signal, which affects the transmission performance of the signal. For example, a high-frequency signal has a relatively large transmission loss. For another example, there is a relatively large transmission loss when a wireless signal is transmitted to a terminal at the edge of network coverage. For yet another example, there is a relatively large transmission loss when a wireless signal is transmitted from an outdoor environment to an indoor environment (outdoor to indoor, O2I) scenario for a terminal.

A power aggregation solution to resolve the foregoing problem is as follows: By adjusting resource allocation of the wireless signal, power on component carriers (CCs) of other terminals is temporarily aggregated to a CC of a target terminal, thereby reducing the impact of the propagation loss of the wireless signal, and thereby improving a data transmission rate of the target terminal.

However, the data transmission rate improvement effect of this power aggregation solution is not good.

### SUMMARY

This application provides a communication method and a communications apparatus, to improve an effect of increasing a data transmission rate of a terminal in a power aggregation solution.

According to a first aspect, this application provides a communication method, where the method is applied to a terminal, and the method includes: determining first information, where the first information is used to determine a first power aggregation resource, the first power aggregation resource is used to aggregate power of a signal sent by a network device to the terminal, and the first power aggregation resource is some frequency domain resources in a component carrier of the terminal; and sending the first information to the network device.

In an example, the method may be performed by a terminal, or may be performed by a chip system, a hardware circuit, and/or a software module applied to the terminal.

For example, the terminal may be a terminal whose network performance does not meet a preset threshold. The network device may perform power aggregation on the terminal, to improve network performance of the terminal.

For example, the network performance may be determined by using the following performance indicators: a downlink rate, a reference signal received power (reference signal receiving power, RSRP), and a channel quality indicator (channel quality indicator, CQI). That the network performance does not meet the preset threshold may include at least one of the following: a downlink rate is less than a rate threshold, an RSRP is less than a power threshold, and a value of a CQI is less than a channel quality threshold. The rate threshold, the power threshold, and the channel quality threshold may be set according to an actual requirement, which is not limited herein.

As an example, the first power aggregation resource may be a frequency domain resource that is idle in a component carrier (component carrier, CC) of the terminal and whose channel quality meets a channel quality threshold. For example, the terminal may determine the first power aggregation resource based on channel quality information of received signals on the CC of the terminal. The terminal may periodically or aperiodically report, to the network device, the channel quality information of the received signals on the CC of the terminal.

In this technical solution, after determining the first power aggregation resource, the terminal may send the first information to the network device, so that the network device may determine the first power aggregation resource based on the first information, and aggregate the power of the signal sent by the network device to the terminal into the first power aggregation resource, so that the terminal can receive the signal on the first power aggregation resource. Considering that the first power aggregation resource is a frequency domain resource that is idle in the CC of the terminal and whose channel quality meets the channel quality threshold, the power aggregation method provided in this technical solution improves an effect of increasing the data transmission rate of the terminal.

With reference to the first aspect, in some implementations of the first aspect, that the first power aggregation resource is some frequency domain resources in the component carrier of the terminal includes: the first power aggregation resource is one or more resource elements in the component carrier of the terminal, where the resource element is a resource block, a resource block group, a resource element, a partial bandwidth BWP, a subband, or a resource element group.

As an example, the first power aggregation resource may be some frequency domain resources in a CC of the terminal. For example, the first power aggregation resource may be one or more resource blocks (resource block, RB) in a CC of the terminal, or may be one or more resource block groups (resource block group, RBG) in a CC of the terminal, or may be one or more resource elements (resource element, RE) in a CC of the terminal, or may be one or more resource element groups (resource element group, REG) in a CC of the terminal, or may be a partial bandwidth (bandwidth part, BWP) in a CC of the terminal, or may be one or more subbands in a CC of the terminal. It should be noted that the resource element may also be referred to as a frequency domain resource element, a frequency domain resource, or the like, which is not specifically limited herein.

With reference to the first aspect, in some implementations of the first aspect, the first information includes an index of a first power aggregation mode and/or a channel measurement result of a received signal on the first power aggregation resource, where the first power aggregation mode indicates the first power aggregation resource.

For example, the first power aggregation resource may be indicated by using the first power aggregation mode. For example, the first power aggregation resource may be indicated by indicating the first power aggregation resource based on a location of the first power aggregation resource in a CC of the terminal, thereby indicating how to allocate power of a signal sent by the network device to the terminal on the CC of the terminal.

For example, the first power aggregation mode may be predefined in a protocol.

For example, after determining the first power aggregation resource, the terminal may indicate the first power aggregation mode to the network device by using an index of the first power aggregation mode, thereby indicating the first power aggregation resource.

For example, after determining the first power aggregation resource, the terminal may send a channel measurement result of a received signal on the first power aggregation resource to the network device, so that the network device may determine the first power aggregation resource based on the received channel measurement result.

With reference to the first aspect, in some implementations of the first aspect, a channel measurement result of a received signal on the first power aggregation resource meets a channel quality threshold.

For example, the number of first power aggregation resources may be one or more.

For example, the terminal may send the first power aggregation resource whose channel measurement result meets the channel quality threshold to the network device.

In some embodiments, the terminal may send the first power aggregation resource whose channel measurement result is optimal to the network device.

For example, the channel measurement result may include one or more of the following: a rank indication (rank indication, RI), a precoding matrix indicator (precoding matrix indicator, PMI), a CQI, a signal to interference plus noise ratio (signal interference noise ratio, SINR), an RSRP, or a reference signal received quality (reference signal received quality, RSRQ).

For example, the optimal channel measurement result may be a highest CQI, or a higher SINR, or a best RSRQ.

With reference to the first aspect, in some implementations of the first aspect, the method further includes: receiving second information from the network device, where the second information is used to configure the first power aggregation mode.

For example, the first power aggregation mode may be configured by the network device. For example, the network device may configure the first power aggregation mode by sending second information to the terminal, where the second information may indicate a parameter of the first power aggregation mode. Correspondingly, the terminal may receive the second information.

With reference to the first aspect, in some implementations of the first aspect, the second information includes an index of the first power aggregation mode and/or a granularity of a resource element of the first power aggregation resource.

For example, the index of the first power aggregation mode may be 1, 2,..., or K, where K is a positive integer.

For example, the granularity of the resource element of the first power aggregation resource may be understood as a quantity of resource elements included in the first power aggregation resource. For example, the quantity of RBs included in the first power aggregation resource.

With reference to the first aspect, in some implementations of the first aspect, the first power aggregation resource includes all resource elements on a first half bandwidth of the component carrier, all resource elements on a second half bandwidth of the component carrier, odd resource elements on an entire bandwidth of the component carrier, or even resource elements on the entire bandwidth of the component carrier.

For example, the first power aggregation resource may include all resource elements on a first half bandwidth of a CC of the terminal, or may include all resource elements on a first half bandwidth of a CC of the terminal, or may include odd resource elements on an entire bandwidth of a CC of the terminal, or may include even resource elements on an entire bandwidth of a CC of the terminal.

With reference to the first aspect, in some implementations of the first aspect, the second information includes indication information for a maximum overshoot power and/or indication information for a location of the first power aggregation resource on the component carrier.

For example, when an adjacent channel leakage ratio (adjacent channel leakage ratio, ACLR) requirement or an out-of-band leakage standard is met, overshooting (overshooting) of signal power is allowed. For example, when the first power aggregation resource does not include a frequency domain resource located at an edge of the operating frequency band of the network device, or when a frequency domain resource adjacent to the first power aggregation resource still belongs to the frequency domain resources of the network device, the network device is allowed to overshoot the signal power. An edge of the operating frequency band of the network device may be understood as an initial frequency domain location and an end frequency domain location of the operating frequency band of the network device. The initial frequency domain location may be understood as a frequency domain location at which there is a first preset offset from the start frequency of the operating frequency band, and the end frequency domain location may be understood as a frequency domain location at which there is a second preset offset from the end frequency of the operating frequency band. The first preset offset and the second preset offset may be set according to an actual requirement, or may be obtained through signaling. This is not specifically limited in this application. The frequency domain resource of the network device may be understood as a frequency domain resource corresponding to the operating frequency band of the network device. The overshooting of the signal power may be understood as that the power of the signal sent by the network device to the terminal is greater than the rated power of the signal. Therefore, the second information may further include the maximum overshooting power. It should be noted that capabilities of the terminals are different, and a quantity of CCs that can be used by the terminal may be one or more, that is, the quantity of CCs of the terminal may be one or more.

For example, the second information may further include indication information about a location of the first power aggregation resource in the CC of the terminal. For example, the indication information about the location of the first power aggregation resource in the CC of the terminal may indicate a start location of the first power aggregation resource in the CC of the terminal, or indicate which resource element in the CC of the terminal is the start resource element of the first power aggregation resource, or indicate which resource element in the CC of the terminal is the start resource element included in the first power aggregation resource. Therefore, the terminal may determine, based on the indication information about the location of the first power aggregation resource in the CC of the terminal, the start location of the first power aggregation resource in the CC of the terminal, and determine, based on a granularity of resource elements of the first power aggregation resource, a quantity of resource elements included in the first power aggregation resource, thereby determining a location distribution of all resource elements included in the first power aggregation resource in the CC of the terminal. For another example, the indication information about the location of the first power aggregation resource in the CC of the terminal may indicate a location of all resource elements included in the first power aggregation resource in the CC of the terminal.

In this implementation, overshooting of the signal power is allowed, which can further improve a data transmission rate of the terminal.

With reference to the first aspect, in some implementations of the first aspect, the second information is further used to configure a measurement manner and/or a reporting manner of the channel measurement result.

As an example, the second information may include measurement configuration information. For example, the second information may include a measurement reporting configuration (report configuration) and/or a measurement resource configuration (resource configuration).

In this implementation, after receiving the second information, the terminal may determine, based on the measurement resource configuration, what resource needs to be measured, and determine, based on the measurement reporting configuration, how to perform measurement and reporting, so that the terminal can measure channel quality of a received signal on the first power aggregation resource and report the measurement result to the network device.

With reference to the first aspect, in some implementations of the first aspect, the method further includes: sending third information to the network device, where the third information is used to request power aggregation.

For example, when the downlink transmission rate or the channel quality of the terminal cannot meet the quality of service requirement, the terminal may send the third information to the network device, to request the network device to initiate power aggregation, thereby improving the downlink transmission rate or the channel quality of the terminal.

With reference to the first aspect, in some implementations of the first aspect, the method further includes: sending fourth information to the network device, where the fourth information indicates a power aggregation mode supported by the terminal.

For example, the power aggregation mode supported by the terminal may be a power aggregation mode autonomously determined by the terminal.

For example, the fourth information may further include a cell for which measurement is requested and/or a beam for which measurement is requested, so that the network device may configure a measurement manner and/or a reporting manner of the channel measurement result for the terminal based on the fourth information.

For example, the third information and the fourth information may be carried in a same message for sending, or may be carried in different messages for sending. This is not limited herein.

According to a second aspect, this application provides a communication method, where the method is applied to a network device, and the method includes: receiving first information from a terminal, where the first information is used to determine a first power aggregation resource, the first power aggregation resource is used to aggregate power of a signal sent by the network device to the terminal, and the first power aggregation resource is some frequency domain resources in a component carrier of the terminal; and sending a signal to the terminal based on the first information.

In an example, the method may be performed by a network device, or may be performed by a chip system, a hardware circuit, and/or a software module applied to the network device.

In an example, the terminal may be a terminal whose network performance does not meet a preset threshold. The network device may perform power aggregation on the terminal, to improve network performance of the terminal.

In an example, the network performance may be determined by using the following performance indicators: a downlink rate, an RSRP, and a CQI. That the network performance does not meet the preset threshold may include at least one of the following: a downlink rate is less than a rate threshold, an RSRP is less than a power threshold, or a value of a CQI is less than a channel quality threshold. The rate threshold, the power threshold, and the channel quality threshold may be set according to an actual requirement, which is not limited herein.

For example, the first power aggregation resource may be a frequency domain resource that is idle in a CC of the terminal and whose channel quality meets a channel quality threshold. For example, the terminal may determine the first power aggregation resource based on the channel quality information of the received signal on the CC of the terminal. The terminal may periodically or aperiodically report the channel quality information of the received signal on the CC of the terminal to the network device.

In this technical solution, after receiving the first information sent by the terminal and determining the first power aggregation resource based on the first information, the network device may aggregate the power of the signal sent by the network device to the terminal to the first power aggregation resource, so that the terminal can receive the signal on the first power aggregation resource. Considering that the first power aggregation resource is a frequency domain resource that is idle in a CC of the terminal and whose channel quality meets a channel quality threshold, the power aggregation method provided in this technical solution improves an effect of increasing a data transmission rate of the terminal.

With reference to the second aspect, in some implementations of the second aspect, that the first power aggregation resource is some frequency domain resources in the component carrier of the terminal includes: the first power aggregation resource is one or more resource elements in the component carrier of the terminal, where the resource element is a resource block, a resource block group, a resource element, a partial bandwidth BWP, a subband, or a resource element group.

For example, the first power aggregation resource may be some frequency domain resources in the CC of the terminal. For example, the first power aggregation resource may be one or more RBs in the CC of the terminal, or may be one or more RBGs in the CC of the terminal, or may be one or more REs in the CC of the terminal, or may be one or more REGs in the CC of the terminal, or may be a BWP in the CC of the terminal, or may be one or more subbands in the CC of the terminal. It should be noted that the resource element may also be referred to as a frequency domain resource element, a frequency domain resource, or the like, which is not specifically limited herein.

With reference to the second aspect, in some implementations of the second aspect, the first information includes an index of a first power aggregation mode and/or a channel measurement result of a received signal on the first power aggregation resource, where the first power aggregation mode indicates the first power aggregation resource.

For example, the first power aggregation resource may be indicated by using the first power aggregation mode. For example, the first power aggregation resource may be indicated by indicating the first power aggregation resource based on a location of the first power aggregation resource in the CC of the terminal, thereby indicating how to allocate, on the CC of the terminal, the power of the signal sent by the network device to the terminal.

For example, the first power aggregation mode may be predefined by a protocol.

For example, after determining the first power aggregation resource, the terminal may indicate the first power aggregation mode to the network device by using an index of the first power aggregation mode, thereby indicating the first power aggregation resource.

For example, after determining the first power aggregation resource, the terminal may send a channel measurement result of the received signal on the first power aggregation resource to the network device. Correspondingly, the network device may receive the channel measurement result sent by the terminal, and determine the first power aggregation resource based on the received channel measurement result.

With reference to the second aspect, in some implementations of the second aspect, the channel measurement result of the received signal on the first power aggregation resource meets a channel quality threshold.

For example, there may be one or more first power aggregation resources.

As an example, the terminal may send, to the network device, the first power aggregation resource whose channel measurement result meets the channel quality threshold.

In some embodiments, the terminal may send, to the network device, the first power aggregation resource whose channel measurement result is optimal.

As an example, the channel measurement result may include one or more of the following: an RI, a PMI, a CQI, a SINR, an RSRP, or an RSRQ.

As an example, the channel measurement result may be optimal when a CQI is the highest, or a SINR is the highest, or an RSRQ is the best.

With reference to the second aspect, in some implementations of the second aspect, the method further includes: sending second information to the terminal, where the second information is used to configure the first power aggregation mode.

For example, the first power aggregation mode may be configured by the network device. For example, the network device may configure the first power aggregation mode by sending second information to the terminal, where the second information may indicate a parameter of the first power aggregation mode.

For example, the network device may configure the first power aggregation mode for the terminal based on real-time resource idle status of the CCs of the terminal.

With reference to the second aspect, in some implementations of the second aspect, the second information includes an index of the first power aggregation mode and/or a granularity of resource elements of the first power aggregation resource.

For example, the index of the first power aggregation mode may be 1, 2,..., K, where K is a positive integer.

For example, the granularity of the resource element of the first power aggregation resource may be understood as a quantity of resource elements included in the first power aggregation resource, for example, a quantity of RBs included in the first power aggregation resource.

With reference to the second aspect, in some implementations of the second aspect, the first power aggregation resource includes: all resource elements on a first half bandwidth of the component carrier, all resource elements on a second half bandwidth of the component carrier, and odd-numbered resource elements on an entire bandwidth of the component carrier; and an even-numbered resource unit on an entire bandwidth of the component carrier.

For example, the first power aggregation resource may include all resource elements on a first half-bandwidth in the CC of the terminal, or may include all resource elements on a first half-bandwidth in the CC of the terminal, or may include odd-numbered resource elements on an entire bandwidth of the CC of the terminal. or may include an even-numbered resource unit on an entire bandwidth of a CC of the terminal.

With reference to the second aspect, in some implementations of the second aspect, the second information includes indication information of a maximum overtransmit power and/or indication information of a location of the first power aggregation resource in the component carrier.

By way of example, over-transmission (over-transmission) of signal power is allowed on the premise that the ACLR requirements or out-of-band leakage criteria are met. For example, when the first power aggregation resource does not include the frequency domain resource located at the edge location of the operating band of the network device, or the frequency domain resource adjacent to the first power aggregation resource still belongs to the frequency domain resource of the network device, the network device is allowed to overtransmit the signal power. The edge location of the operating band of the network device may be understood as a start frequency domain location and an end frequency domain location of the operating band of the network device. The start frequency domain location may be understood as a frequency domain location that has a first preset offset to the start frequency of the operating band, and the end frequency domain location may be understood as a frequency domain location that has a second preset offset to the end frequency of the operating band. The first preset offset and the second preset offset may be set based on an actual requirement, or may be obtained by using signaling. This is not specifically limited in this application. The frequency domain resource of the network device may be understood as a frequency domain resource corresponding to an operating band of the network device. Overtransmission of signal power may be understood as that power of a signal sent by the network device to the terminal is greater than a rated power of the signal. Therefore, the second information may further include the maximum overtransmission power. It should be noted that the terminal has different capabilities, and a quantity of CCs that can be used by the terminal may be one or more, that is, a quantity of CCs of the terminal may be one or more.

For example, the second information may further include indication information about a location of the first power aggregation resource in the CC of the terminal. For example, the indication information about the location of the first power aggregation resource in the CC of the terminal may indicate a start location of the first power aggregation resource in the CC of the terminal, or indicate which resource element in the CC of the terminal is the start resource element of the first power aggregation resource, or indicate which resource element in the CC of the terminal is the start resource element included in the first power aggregation resource. Therefore, the terminal may determine, based on the indication information about the location of the first power aggregation resource in the CC of the terminal, the start location of the first power aggregation resource in the CC of the terminal, and determine, based on a granularity of resource elements of the first power aggregation resource, a quantity of resource elements included in the first power aggregation resource, thereby determining a location distribution of all resource elements included in the first power aggregation resource in the CC of the terminal. For another example, the indication information about the location of the first power aggregation resource in the CC of the terminal may indicate a location of all resource elements included in the first power aggregation resource in the CC of the terminal.

In this implementation, overshooting of the signal power is allowed, which can further improve a data transmission rate of the terminal.

With reference to the second aspect, in some implementations of the second aspect, the second information is further used to configure a measurement manner and/or a reporting manner of the channel measurement result.

As an example, the second information may include measurement configuration information. For example, the second information includes a measurement reporting configuration (report configuration) and/or a measurement resource configuration (resource configuration).

In this implementation, the network device may configure the measurement configuration information for the terminal by using the second information, so that after receiving the second information, the terminal can determine, based on the measurement resource configuration, what resource needs to be measured, and determine, based on the measurement reporting configuration, how to perform measurement and reporting, thereby measuring channel quality of a received signal on the first power aggregation resource, and reporting the measurement result to the network device.

With reference to the second aspect, in some implementations of the second aspect, the method further includes: receiving third information from the terminal, where the third information is used to request power aggregation.

For example, when the downlink transmission rate of the terminal or the channel quality cannot meet the quality of service requirement, the terminal may send third information to the network device, to request the network device to initiate power aggregation, thereby improving the downlink transmission rate or the channel quality of the terminal. Correspondingly, the network device may receive the third information and send power aggregation.

With reference to the second aspect, in some implementations of the second aspect, the method further includes: sending fourth information to the network device, where the fourth information indicates a power aggregation mode supported by the terminal.

For example, the power aggregation mode supported by the terminal may be a power aggregation mode autonomously determined by the terminal. After receiving the fourth information, the network device may determine the second information based on the fourth information.

For example, the fourth information may further include a cell for which measurement is requested and/or a beam for which measurement is requested, so that the network device may configure a measurement manner and/or a reporting manner of a channel measurement result for the terminal based on the fourth information.

For example, the third information and the fourth information may be carried in a same message for sending, or may be carried in different messages for sending. This is not limited herein.

According to a third aspect, this application provides a communications apparatus, where the apparatus includes modules configured to implement the method in any one of the first aspect or the implementations of the first aspect, and each module may be implemented in a form of hardware and/or software.

For example, the apparatus may include a processing module and a sending module. The processing module is configured to determine first information, where the first information is used to determine a first power aggregation resource, the first power aggregation resource is used to aggregate power of signals sent by a network device to the terminal, and the first power aggregation resource is some frequency domain resources in a component carrier of the terminal; and the sending module is configured to send the first information to the network device.

With reference to the third aspect, in some implementations of the third aspect, the first power aggregation resource is some frequency domain resources in the component carrier of the terminal, where the first power aggregation resource is some frequency domain resources in the component carrier of the terminal, and the first power aggregation resource is one or more resource units in the component carrier of the terminal, and the resource unit is a resource block, a resource block group, a resource element, a BWP, a subband, or a resource element group.

With reference to the third aspect, in some implementations of the third aspect, the first information includes an index of a first power aggregation mode and/or a channel measurement result of a received signal on the first power aggregation resource, where the first power aggregation mode indicates the first power aggregation resource.

With reference to the third aspect, in some implementations of the third aspect, the channel measurement result of the received signal on the first power aggregation resource meets a channel quality threshold.

With reference to the third aspect, in some implementations of the third aspect, the apparatus may further include a receiving module, where
With reference to the third aspect, in some implementations of the third aspect, the second information includes an index of the first power aggregation mode and/or a granularity of resource elements on the first power aggregation resource.

With reference to the third aspect, in some implementations of the third aspect, the first power aggregation resource includes all resource elements on a first half bandwidth of the component carrier, all resource elements on a second half bandwidth of the component carrier, odd resource elements on an entire bandwidth of the component carrier, or even resource elements on an entire bandwidth of the component carrier.

With reference to the third aspect, in some implementations of the third aspect, the second information includes indication information for a maximum overshoot power and/or indication information for a location of the first power aggregation resource in the component carrier.

With reference to the third aspect, in some implementations of the third aspect, the second information is further used to configure a measurement manner and/or a reporting manner of the channel measurement result.

With reference to the third aspect, in some implementations of the third aspect, the sending module is further configured to send third information to the network device, where the third information is used to request power aggregation.

With reference to the third aspect, in some implementations of the third aspect, the sending module is further configured to send fourth information to the network device, where the fourth information indicates a power aggregation mode supported by the terminal.

According to a fourth aspect, this application provides a communications apparatus, where the apparatus includes modules configured to implement the method in any one of the second aspect or the implementations of the second aspect, and each module may be implemented in a form of hardware and/or software.

For example, the apparatus may include a receiving module and a sending module. The receiving module is configured to receive first information from a terminal, where the first information is used to determine a first power aggregation resource, the first power aggregation resource is used to aggregate power of a signal sent by the network device to the terminal, and the first power aggregation resource is some frequency domain resources in a component carrier of the terminal. The sending module is configured to send a signal to the terminal based on the first information.

With reference to the fourth aspect, in some implementations of the fourth aspect, that the first power aggregation resource is some frequency domain resources in the component carrier of the terminal includes: the first power aggregation resource is one or more resource elements in the component carrier of the terminal, where the resource element is a resource block, a resource block group, a resource element, a partial bandwidth BWP, a subband, or a resource element group.

With reference to the fourth aspect, in some implementations of the fourth aspect, the first information includes an index of a first power aggregation mode and/or a channel measurement result of a received signal on the first power aggregation resource, where the first power aggregation mode indicates the first power aggregation resource.

With reference to the fourth aspect, in some implementations of the fourth aspect, a channel measurement result of a received signal on the first power aggregation resource meets a channel quality threshold.

With reference to the fourth aspect, in some implementations of the fourth aspect, the sending module is further configured to send second information to the terminal, where the second information is used to configure the first power aggregation mode.

With reference to the fourth aspect, in some implementations of the fourth aspect, the second information includes an index of the first power aggregation mode and/or a granularity of resource elements of the first power aggregation resource.

With reference to the fourth aspect, in some implementations of the fourth aspect, the first power aggregation resource includes all resource elements on a first half bandwidth of the component carrier, all resource elements on a second half bandwidth of the component carrier, odd resource elements on an entire bandwidth of the component carrier, or even resource elements on the entire bandwidth of the component carrier.

With reference to the fourth aspect, in some implementations of the fourth aspect, the second information includes indication information for a maximum overshoot power and/or indication information for a location of the first power aggregation resource in the component carrier.

With reference to the fourth aspect, in some implementations of the fourth aspect, the second information is further used to configure a measurement manner and/or a reporting manner of the channel measurement result.

With reference to the fourth aspect, in some implementations of the fourth aspect, the receiving module is further configured to receive third information from the terminal, where the third information is used to request power aggregation.

With reference to the fourth aspect, in some implementations of the fourth aspect, the sending module is further configured to send fourth information to the network device, where the fourth information indicates a power aggregation mode supported by the terminal.

According to a fifth aspect, this application provides a communications apparatus, including a processor, where the processor may be coupled to a memory, and is configured to invoke program code in the memory, to perform the method according to the first aspect or any possible implementation thereof. Optionally, the apparatus further includes a memory. Optionally, the apparatus further includes a communications interface, and the processor is coupled to the communications interface.

For example, the apparatus may be a terminal, or may be a chip system, a hardware circuit, and/or a software module applied to a terminal.

According to a sixth aspect, this application provides a communication apparatus, including a processor, where the processor may be coupled to a memory and configured to invoke program code in the memory to perform the method according to the second aspect or any one of the possible implementations thereof. Optionally, the apparatus further includes a memory. Optionally, the apparatus further includes a communication interface, and the processor is coupled to the communication interface.

As an example, the apparatus may be a network device, or may be a chip system, a hardware circuit, and/or a software module applied to a network device.

According to a seventh aspect, this application provides a communication system, where the system includes the apparatus according to the third aspect or the fifth aspect, and also includes the apparatus according to the fourth aspect or the sixth aspect.

According to an eighth aspect, this application provides a computer program product comprising instructions, where when the computer program product is run on a computer, the computer is enabled to perform the method according to any one of the first aspect, the second aspect, or the possible implementations thereof.

According to a ninth aspect, this application provides a computer-readable medium, where the computer-readable medium stores program code for execution by a device, and the program code is used to perform the method according to any one of the first aspect, the second aspect, or the possible implementations thereof.

For technical effects that can be achieved by any one of the third aspect to the ninth aspect and any possible design of any one of the aspects, refer to the descriptions of the technical effects that can be achieved in the first aspect to the second aspect. Details are not described herein again.

### BRIEF DESCRIPTION OF DRAWINGS

FIG. 1 is a schematic diagram illustrating a communication system to which an embodiment of this application is applicable;
FIG. 2 is a schematic diagram illustrating another communication system to which an embodiment of this application is applicable;
FIG. 3 is a schematic flowchart of a power aggregation method;
FIG. 4 is a schematic illustrative diagram of a communication method according to an embodiment of this application;
FIG. 5 is a schematic illustrative diagram of a communication method according to another embodiment of this application;
FIG. 6 is a schematic illustrative diagram of a power aggregation mode according to an embodiment of this application;
FIG. 7 is a schematic illustrative diagram of an overshoot amount of a power aggregation mode according to an embodiment of this application;
FIG. 8 is a schematic structural diagram of a communications apparatus according to an embodiment of this application;
FIG. 9 is a schematic structural diagram of a communication apparatus according to another embodiment of this application.

### DESCRIPTION OF EMBODIMENTS

The exemplary embodiments are illustrated in detail here, with examples shown in the accompanying drawings. The following description refers to the accompanying drawings, and unless otherwise indicated, the same reference numerals in different drawings represent the same or similar elements. The implementations described in the following exemplary embodiments do not necessarily represent all implementations consistent with this application. On the contrary, they are merely examples of apparatuses and methods consistent with some aspects of this application, as set forth in the appended claims.

A wireless communications system includes a communications apparatus, and communication apparatuses may perform wireless communication by using an air interface resource. The communication apparatus may include a network device and a terminal device. The air interface resource may include at least one of a time domain resource, a frequency domain resource, a code resource, and a space resource. In the embodiments of this application, "at least one" may also be described as "one or more," and "a plurality of" may be two, three, four, or more, which is not limited in this application.

In this embodiment of this application, for a technical feature, "first", "second", "third", "A", "B", "C", "D", or the like, is used to distinguish technical features in the technical feature. The technical features described in the "first", "second", "third", "A", "B", "C", and "D" have no sequence or size order.

In this embodiment of this application, the term "wireless communication" may also be referred to as "communication", and the term "communication" may also be described as "data transmission", "information transmission", "propagation", or "transmission".

Technical solutions provided in this application may be applied to various communications systems, including but not limited to a narrowband Internet of Things system (narrow band-internet of things, NB-IoT), a global system for mobile communications (global system for mobile communications, GSM), and an enhanced data rate for GSM evolution system. EDGE), a wideband code division multiple access system (WCDMA), a code division multiple access 2000 (CDMA2000), a time division synchronous code division multiple access system (time division-synchronization code division multiple access, TD-SCDMA), a wireless fidelity system, a WiFi system, a third generation (3G) mobile communications system, a long term evolution (LTE) system, a long term evolution (LTE advanced, LTE-A) system, an LTE frequency division duplex (Frequency division duplex) system, FDD) system, LTE time division duplex (time division duplex, TDD), fourth generation (fourth generation, 4G) mobile communication system, fifth generation (5th generation, 5G) mobile communication system, 5G new radio, (NR) Three application scenarios of the communications system: enhanced mobile broadband (enhanced mobile broadband, eMBB), ultra-reliable and low-latency communication (ultra-reliable and low latency communications, URLLC), mass machine type communication (mMTC), and the sixth generation (6th generation) in the future, 6G) mobile communications system, for example, a high frequency, a terahertz, or optical communications system. This is not specifically limited in this application.

In the embodiments of this application, the network device is an apparatus deployed in a radio access network to provide a wireless communication function for a terminal device. The network device may include a macro base station, a micro base station (also referred to as a small cell), a relay station, an access point, or the like in various forms. In systems using different radio access technologies, the name of the network device may be different, for example, a base transceiver station (BTS) in a GSM or CDMA network, a node B (node B, NB) in WCDMA, or an evolved NodeB (evolved NodeB, eNB, or eNodeB) in LTE. The network device may alternatively be a radio controller in a cloud radio access network (cloud radio access network, CRAN) scenario. The network device may alternatively be a base station device in a future 5G network or a network device in a future evolved public land mobile (communication) network (public land mobile network, PLMN). The network device may alternatively be a wearable device or an in-vehicle device. The network device may alternatively be a transmission and reception point (transmission and reception point, TRP). In the embodiments of this application, an apparatus configured to implement a function of the network device may be the network device, or may be an apparatus that can support the network device in implementing the function, for example, a chip system, where the apparatus may be installed in the network device; or may be another apparatus that can implement the function of the network device. This is not limited herein. In the embodiments of this application, the chip system may include a chip, or may include a chip and another discrete component.

In the embodiments of this application, the terminal device may be referred to as a terminal, and is an entity at a user side that is configured to receive or send a signal. The terminal may include various handheld devices, vehicle-mounted devices, wearable devices, computing devices, or other processing devices connected to a wireless modem that have a wireless communication function. The terminal may be a mobile station (mobile station, MS), a subscriber unit (subscriber unit, SU), a cellular phone (cellular phone), a smartphone (smart phone), a wireless data card, a personal digital assistant (PDA) computer, a tablet computer, a wireless modem (modem), a handset (handset), a laptop computer (laptop computer), a machine type communication (machine type communication, MTC) terminal, or the like. In the embodiments of this application, an apparatus configured to implement a function of the terminal may be the terminal, or may be an apparatus that can support the terminal in implementing the function, for example, a chip system, where the apparatus may be installed in the terminal, or may be another apparatus that can implement the function of the terminal. This is not limited herein.

The network device may provide services for terminals within a cell. The terminal communicates with the network device or other devices corresponding to the cell through the transmission resources (for example, frequency domain resources, or spectrum resources) allocated by the network device. The network device may be a macro base station (for example, a macro eNB or a macro gNB), or may be a base station corresponding to a small cell (small cell). The small cell herein may include a metro cell (metro cell), a micro cell (micro cell), a pico cell (pico cell), a femto cell (femto cell), and the like. These small cells have the characteristics of small coverage and low transmit power, and are suitable for providing high-speed data transmission services.

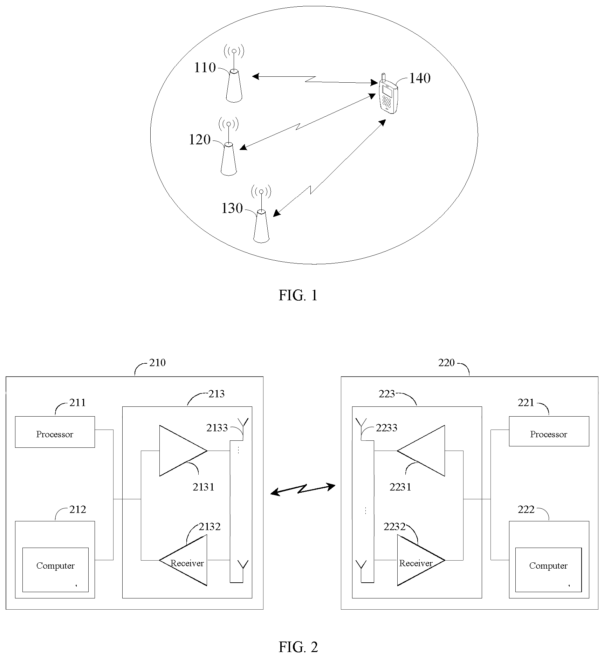

For example, FIG. 1 is a schematic illustrative diagram of a communication system to which an embodiment of this application is applicable. As shown in FIG. 1, the communication system may include a plurality of network devices (such as base station 110, base station 120, and base station 130 in FIG. 1) and a terminal 140. The number of network devices and terminals is merely an example, and this is not limited in this application. It should be understood that FIG. 1 is merely a schematic diagram, and the communication system may further include other network devices, for example, may further include a core network device, which is not shown in FIG. 1.

Taking the base station 110 among multiple network devices as an example, the base station 110 may provide communication services for a terminal 140 within a cell. The base station 110 may send downlink information to the terminal 140, where the downlink information may be control information or may be data information, which is not limited in this application. The terminal 140 may send uplink information to the base station 110. In some embodiments, multiple network devices may simultaneously transmit data or control signaling to the terminal 140.

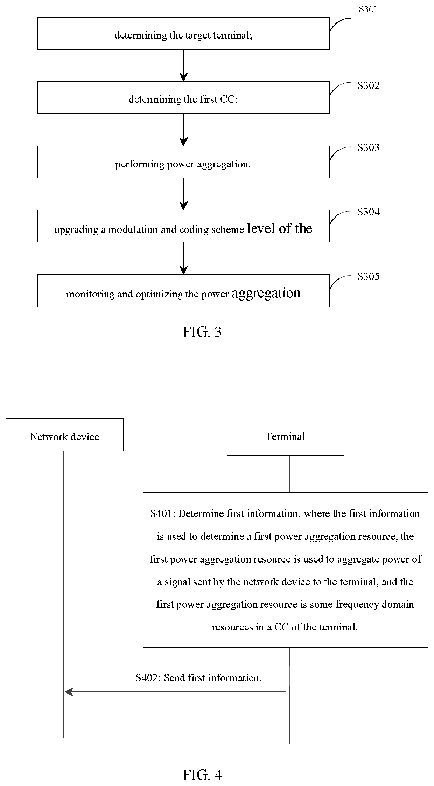

For example, FIG. 2 is a schematic illustrative diagram of another communication system to which an embodiment of this application is applicable. As shown in FIG. 2, the communication system may include a terminal 210 and a network device 220. The terminal 210 includes a processor 211, a memory 212, and a transceiver 213. The transceiver 213 includes a transmitter 2131, a receiver 2132, and an antenna 2133. The memory 212 is configured to store computer program code, and the processor 211 may invoke the computer program code to enable the terminal 210 to implement related functions. The network device 220 includes a processor 221, a memory 222, and a transceiver 223. The transceiver 223 includes a transmitter 2231, a receiver 2232, and an antenna 2233. The memory 222 is configured to store computer program code, and the processor 221 may invoke the computer program code to enable the network device 220 to implement related functions. The receiver 2132 may be configured to receive, by using the antenna 2133, transmission control information sent by the network device 220, and the transmitter 2131 may be configured to send, by using the antenna 2133, transmission feedback information to the network device 220. The transmitter 2231 may be configured to send, by using the antenna 2233, transmission control information to the terminal 210, and the receiver 2232 may be configured to receive, by using the antenna 2233, transmission feedback information sent by the terminal 210.
The technical problem resolved in this application is described below with reference to FIG. 3.

There is a propagation loss during transmission of a radio signal, thereby affecting signal transmission performance. For example, a high-frequency signal has a relatively large transmission loss during transmission due to factors such as free space loss and atmospheric absorption. The free space loss may be understood as a basic loss when the high-frequency signal propagates in free space, and the free space loss is proportional to the square of the frequency. The atmospheric absorption may be understood as absorption of the high-frequency signal by molecules (such as water vapor) in the atmosphere during propagation, and the atmospheric absorption intensifies with an increase in frequency. For another example, a terminal at an edge of network coverage is relatively far away from a network device, and therefore there is a relatively large transmission loss when a radio signal is transmitted to the terminal at the edge of network coverage. For another example, there is a relatively large transmission loss when a radio signal is transmitted from an outdoor environment to a terminal in an indoor environment (outdoor to indoor, O2I) scenario. It should be noted that O2I is used to describe a process in which a signal is transmitted from an outdoor environment to an indoor environment. In an O2I scenario, a signal must pass through an outer wall, a window, and other possible obstacles of a building before reaching an indoor receiver (for example, a terminal).

A power aggregation solution for resolving the foregoing problem is as follows: By adjusting resource allocation of a radio signal, power on component carriers (component carrier, CC) of other terminals is temporarily aggregated to a CC of a target terminal, so as to enhance signal reception quality of the target terminal, thereby reducing impact of a propagation loss of the radio signal, and further improving a data transmission rate of the target terminal. The target terminal may include a terminal at an edge of network coverage, an indoor and outdoor (O2I) terminal, a terminal whose download rate is less than or equal to a download threshold (for example, 100 megabits per second (Mbps)), and the like. In this embodiment of this application, power aggregation may be used to describe a resource allocation policy in a wireless communications network. Power aggregation may also be referred to as power concentration, power regathering, or power boosting, which is not specifically limited in this application. Through power aggregation, the data transmission rate and service experience of the target terminal can be improved without significantly increasing the total power consumption of the network. The component carrier may also be referred to as a carrier component. The data transmission rate may also be referred to as a data rate, and indicates an amount of information (for example, a quantity of bits) transmitted on a channel within a unit time. It should be understood that the CC of the terminal may be understood as a frequency domain resource allocated by the network device to the terminal when the network device provides a network service for the terminal.

For example, FIG. 3 is a schematic flowchart of a power aggregation method. As shown in FIG. 3, the method may include S301 to S305.

S301: Determine a target terminal.

As an example, the target terminal may be understood as a terminal whose network performance does not meet a preset threshold.

As an example, the network performance may be determined by using the following performance indicators: a downlink rate, a reference signal received power (reference signal receiving power, RSRP), and a channel quality indicator (channel quality indicator, CQI).

As an example, the network performance not meeting the preset threshold may include at least one of the following: a downlink rate is less than a rate threshold, an RSRP is less than a power threshold, and a value of a CQI is less than a channel quality threshold. The rate threshold, the power threshold, and the channel quality threshold may be set according to an actual requirement, which is not limited herein.

For example, the terminal may report network performance of the terminal to the network device, so that the network device can monitor network performance of the terminal in the cell, thereby determining the target terminal.

S302: Determine a first CC.

For example, the network device may configure a CC for each terminal in the cell, so that the terminal can receive a signal on the CC.

For example, the first CC may be understood as a CC whose power usage rate is less than a usage rate threshold. It should be noted that the power of the CC may be understood as power allocated by the network device to the CC, or power of a signal sent by the network device to the terminal on the CC.

For example, the network device may determine or evaluate power usage of CCs of all terminals in the cell, and determine a CC whose power usage rate is less than the usage rate threshold as the first CC. It should be understood that there may be one or more first CCs.

S303: Perform power aggregation.

As an example, after determining the first CC, the network device may temporarily aggregate or allocate the power on the first CC to the CC of the target terminal. For example, the network device may temporarily stop allocating power to the first CC, and aggregate the power not allocated to the first CC to the CC of the target terminal, so as to increase the power of the signal sent by the network device to the target terminal, thereby improving the data transmission rate of the target terminal.

In addition, after performing power aggregation, the network device may monitor the RSRP and the signal to interference plus noise ratio (SINR) of the target terminal, so as to determine whether the signal quality of the target terminal is improved. If the signal quality of the target terminal does not change, or if the difference between the signal quality of the target terminal after power aggregation and the signal quality of the target terminal before power aggregation is less than a signal quality threshold, it is considered that the signal quality of the target terminal is not improved; or if the difference between the signal quality of the target terminal after power aggregation and the signal quality of the target terminal before power aggregation is greater than or equal to the signal quality threshold, it is considered that the signal quality of the target terminal is improved.

When the signal quality of the target terminal is not improved, steps S302 to S303 may be repeatedly performed until the signal quality of the target terminal is improved.

S304: Increase the modulation and coding scheme (MCS) level of the target terminal.

As an example, after the signal quality of the target terminal is improved, the network device needs to correspondingly increase the modulation and coding scheme (MCS) level of the target terminal, so that the MCS level can adapt to the change in signal quality, thereby increasing the data rate and network throughput of the target terminal, and ensuring the reliability of data transmission. It should be noted that the higher the SINR of the terminal, the better the signal quality; the higher the CQI of the terminal, the higher the MCS level of the terminal should be.

S305: Monitor and optimize the power aggregation scheme.

As an example, the network device may continuously monitor or observe the network performance of the target terminal to ensure that the power aggregation policy can effectively improve the signal quality and service quality of the target terminal. If the improvement effect on the signal quality, service quality, or network performance of the target terminal does not reach a preset threshold, steps S302 to S304 may be repeatedly performed to re-evaluate the first CC, adjust the power aggregation policy, and select and configure the MCS.

In some embodiments, terminals within a cell may periodically feed back the network performance of the terminals to the network device, so that the network device can maintain sensitivity to changes in network load and terminal distribution based on the network performance feedback by the terminals within the cell, thereby facilitating the network device to adjust the power aggregation policy and optimize the MCS configuration.

The method in Figure 3 allows a network device (such as a base station) to reallocate power to the CC of a target terminal without increasing the total radio frequency power, thereby increasing the power on the CC of the target terminal and improving the communication quality and data rate of the target terminal.

However, the power aggregation method in Figure 3 has certain limitations in terms of power allocation and frequency domain resource utilization, which results in suboptimal improvement in the data transmission rate for the target terminal. For example, the power aggregation method in Figure 3 assumes that the target terminal can use all available frequency domain resources in the target CC, so the network device aggregates power across all available frequency domain resources in the target CC, or in other words, the network device aggregates or allocates power to all available frequency domain resources in the target CC. However, the frequency domain resources that the target terminal can actually use are related to the capabilities of the target terminal, so the target terminal may not be able to use all available frequency domain resources in the target CC. This leads to underutilization of the power aggregated in the target CC, thereby failing to sufficiently improve the data rate of the target terminal. Additionally, the power aggregation method in Figure 3 does not consider that different frequency domain resources may have different channel qualities, thus neglecting the importance of channel quality in improving the data rate of the target terminal, and consequently, the method cannot sufficiently enhance the data rate of the target terminal. The target CC can be understood as the CC of the target terminal.

Based on this, the applicant proposes that the first power may be aggregated to a frequency domain resource that is idle and whose channel quality meets a channel quality threshold in the first frequency domain resource, thereby optimizing an existing power aggregation method or power aggregation policy, so as to effectively enhance signal quality of the target terminal, and thereby improve a service experience of the target terminal. The first frequency domain resource may be understood as a frequency domain resource that can be used by the target terminal in the target CC.

In view of this, this application provides a communication method and a communications apparatus. In the technical solutions provided in this application, the network device may determine, through measurement feedback of the terminal, a frequency domain resource for power aggregation in the target CC, or determine which frequency domain resources in the target CC are for power aggregation, thereby effectively improving signal quality of the target terminal, and thereby improving a service experience of the target terminal.
The following provides a detailed description of the technical solutions provided in this application with reference to FIG. 4 to FIG. 7.

FIG. 4 is a schematic diagram of a communication method according to an embodiment of this application. As shown in FIG. 4, the method may include S401 and S402.

For example, the method may be performed by a terminal, or may be performed by a chip system, a hardware circuit, and/or a software module applied to the terminal. It should be understood that the terminal in this embodiment may be understood as a terminal whose network performance does not meet a preset threshold. The network device may perform power aggregation on the terminal, to improve network performance of the terminal.

S401: Determine first information, where the first information is used to determine a first power aggregation resource, the first power aggregation resource is used to aggregate power of a signal sent by a network device to a terminal, and the first power aggregation resource is some frequency domain resources in a CC of the terminal.

For example, the first power aggregation resource may be some frequency domain resources in the CC of the terminal. For example, the first power aggregation resource may be one or more resource elements in the CC of the terminal. The resource element may be a resource block (resource block, RB), a resource block group (resource block group, RBG), a resource element (resource element, RE), a bandwidth part (bandwidth part, BWP), a subband, or a resource element group (resource element group, REG). In some embodiments, the resource element may also be referred to as a frequency domain resource or a frequency domain resource element, which is not limited herein.

For example, the first power aggregation resource may be a frequency domain resource that is idle in a CC of the terminal and whose channel quality meets a channel quality threshold. The channel quality threshold may be set according to an actual requirement, which is not limited in this application.

For example, the terminal may determine the first power aggregation resource based on the channel quality information of the received signal on the CC of the terminal. It should be noted that the terminal may periodically or aperiodically report, to the network device, the channel quality information of the received signal on the CC of the terminal. For example, the terminal may determine, based on the channel quality information reported most recently, a frequency domain resource that is idle in the CC of the terminal and whose channel quality meets the channel quality threshold, and determine the frequency domain resource that is idle in the CC of the terminal and whose channel quality meets the channel quality threshold as the first power aggregation resource. The latest reporting may be understood as a reporting whose reporting time is closest to the current time. For another example, the terminal may determine, based on the channel quality information reported most recently for a plurality of times, a frequency domain resource that is idle in the CC of the terminal and whose channel quality meets the channel quality threshold, so as to determine the first power aggregation resource. The channel quality information may include a CQI.

For example, the network device may aggregate power of a signal sent by the network device to the terminal to the first power aggregation resource. The power of the signal sent by the network device to the terminal may be the power on the target CC after power aggregation is performed.

For example, the first information may include indication information of the first power aggregation resource, so that the network device may determine the first power aggregation resource based on the first information.

S402: Send the first information to the network device.

In this embodiment, after determining the first power aggregation resource, the terminal may send the first information to the network device. Correspondingly, the network device may receive the first information, and determine the first power aggregation resource based on the first information and the capability of the terminal.

For example, after determining the first power aggregation resource, the network device may configure downlink transmission information for the terminal based on the first power aggregation resource, and send the configuration information to the terminal.

As an example, the network device may send the configuration information to the terminal through a physical downlink control channel (physical downlink control channel, PDCCH). In some embodiments, the configuration information may include information such as resource allocation, power control, a modulation scheme, and a data rate.

In some embodiments, the quantity of first power aggregation resources reported by the terminal may be a plurality of, and the network device may determine a final first power aggregation resource from the plurality of first power aggregation resources based on factors such as a capability of the terminal and channel quality information reported by the terminal.

In this embodiment, after the terminal determines the first power aggregation resource, the terminal may send the first information to the network device, so that the network device may determine the first power aggregation resource based on the first information, and aggregate the power of the signal sent by the network device to the terminal to the first power aggregation resource, so that the terminal can receive the signal on the first power aggregation resource, thereby improving a data transmission rate of the terminal. It may be understood that the first power aggregation resource is a frequency domain resource on a CC of the terminal on which the channel quality meets the channel quality threshold, therefore, the method provided in this embodiment can improve an effect of increasing the data transmission rate of the target terminal.

In some implementations, the network device may define one or more power aggregation modes, where each power aggregation mode indicates a power aggregation resource. The terminal may measure channel quality of received signals on each power aggregation resource, and feed back, to the network device, a channel quality measurement result corresponding to each power aggregation resource and/or an index of a power aggregation mode determined by the terminal based on the channel quality measurement result; and the network device may determine the first power aggregation resource based on the information fed back by the terminal. In this embodiment of this application, the channel quality measurement result may also be referred to as a channel measurement result.

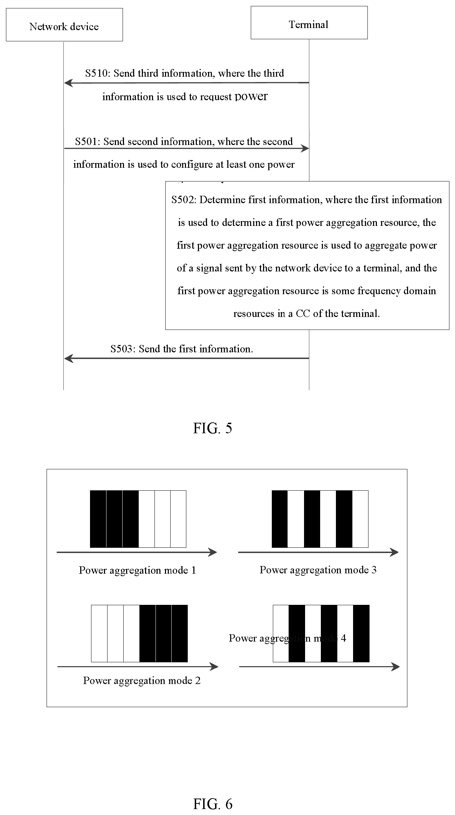

For example, FIG. 5 is a schematic illustrative diagram of a communication method according to another embodiment of this application. As shown in FIG. 5, the method may include S501, S502, and S503.

S501: A network device sends second information to a terminal, where the second information is used to configure at least one power aggregation mode.

In this embodiment, the network device may determine, based on the channel quality information sent by the terminal, whether the network device needs to actively initiate/perform power aggregation, thereby improving a data transmission rate of the terminal. For example, the network device initiates power aggregation when the channel quality of the terminal does not meet the channel quality threshold, or does not initiate power aggregation when the channel quality of the terminal meets the channel quality threshold. For example, the terminal may periodically send, to the network device, the channel quality information of the received signal on the CC of the terminal.

As an example, the network device may further determine, based on the rate parameter configured for the terminal and/or the priority of the terminal, whether power aggregation needs to be initiated. The rate parameter may be understood as a parameter used to indicate rate transmission, for example, may be a data rate. A higher priority of the terminal indicates a higher requirement for channel quality. For example, power aggregation is initiated when the data rate of the terminal is less than a rate threshold; or power aggregation is not initiated when the data rate of the terminal is greater than or equal to the rate threshold. For another example, different data rate thresholds and/or channel quality thresholds are set for the terminal based on different priorities.

As an example, if the network device determines that power aggregation needs to be initiated, the network device may send second information to the terminal, where the second information is used to configure at least one power aggregation pattern (pattern). For example, the network device may configure at least one power aggregation pattern for the terminal based on real-time resource availability on a CC of the terminal, and send the at least one power aggregation pattern to the terminal through the second information. Correspondingly, the terminal may receive the second information, and determine, based on the second information, the at least one power aggregation pattern configured by the network device. It should be noted that a design method for the power aggregation pattern is not specifically limited in this application, and may be designed, for example, based on an actual network design or an actual requirement. In some embodiments, the network device may further configure at least one power aggregation pattern for the terminal based on the capability of the terminal.

It should be noted that there is a one-to-one correspondence between at least one power aggregation mode and at least one power aggregation resource, and each power aggregation mode may indicate a corresponding power aggregation resource. That each power aggregation mode indicates a corresponding power aggregation resource may be understood as that each power aggregation mode indicates a location of the corresponding power aggregation resource in the CC of the terminal, or in other words, each power aggregation mode indicates which frequency domain resources in the CC of the terminal are the corresponding power aggregation resources, or each power aggregation mode indicates which frequency domain resources in the CC of the terminal the power is aggregated to.

As an example, the second information may include an index of each power aggregation mode in at least one power aggregation mode and/or a granularity of resource elements of a power aggregation resource corresponding to each power aggregation mode.

FIG. 6 is a schematic illustrative diagram of a power aggregation mode according to an embodiment of this application. FIG. 6 shows four power aggregation modes, such as power aggregation mode 1, power aggregation mode 2, power aggregation mode 3, and power aggregation mode 4. As shown in FIG. 6, a frequency domain resource formed by black blocks and white blocks may be understood as a CC of the terminal, and the black blocks may be understood as power aggregation resources indicated by each power aggregation mode. It can be seen that the power aggregation resource indicated by the power aggregation mode 1 includes all resource elements on an initial half bandwidth of the CC of the terminal; the power aggregation resource indicated by the power aggregation mode 2 includes all resource elements on a last half bandwidth of the CC of the terminal; the power aggregation resource indicated by the power aggregation mode 3 includes odd resource elements on an entire bandwidth of the CC of the terminal; and the power aggregation resource indicated by the power aggregation mode 4 includes even resource elements on an entire bandwidth of the CC of the terminal.

In some embodiments, the frequency domain resource formed by the black blocks and the white blocks may also be some frequency domain resources in the CC of the terminal. For example, each block (for example, a black block or a white block) may be one resource element in the CC of the terminal. Therefore, the frequency domain resource formed by the black blocks and the white blocks is six resource elements in the CC of the terminal.

As an example, the resource element may be an RB, an RBG, an RE, a BWP, a subband, or a REG, which is not limited herein.

As an example, the granularity of the resource element may be understood as a quantity of resource elements included in the power aggregation resource indicated by the power aggregation mode. As shown in FIG. 6, in the power aggregation resource indicated by the power aggregation mode 1, the granularity of the resource element is 3. In this example, one block (for example, a black block or a white block) represents one resource element.

As an example, the granularity of the resource element may be understood as a quantity of resource elements included in one block (for example, a black block or a white block) in FIG. 6. For example, when one block includes one RBG, the granularity of the resource element is one RBG.

In some embodiments, the granularity of the resource unit may also be referred to as the granularity of power aggregation.

In an implementable manner, when an adjacent channel leakage ratio (adjacent channel leakage ratio, ACLR) requirement or an out-of-band leakage standard is met, overshoot transmission of signal power may be allowed. Overshoot transmission may be referred to as overshoot for short. For example, when the power aggregation resource indicated by the power aggregation mode does not include a frequency domain resource located at an edge of an operating frequency band of the network device, or when a frequency domain resource adjacent to the power aggregation resource indicated by the power aggregation mode still belongs to the frequency domain resource of the network device, the network device is allowed to perform overshoot transmission of the signal power. The edge of the operating frequency band of the network device may be understood as an initial frequency domain location and an end frequency domain location of the operating frequency band of the network device. The initial frequency domain location may be understood as a frequency domain location that has a first preset offset from an initial frequency of the operating frequency band, and the end frequency domain location may be understood as a frequency domain location that has a second preset offset from an end frequency of the operating frequency band. The first preset offset and the second preset offset may be set according to an actual requirement, or may be obtained through signaling. This is not specifically limited in this application. The frequency domain resource of the network device may be understood as a frequency domain resource corresponding to the operating frequency band of the network device. The overshoot transmission of the signal power may be understood as that the power of the signal sent by the network device to the terminal is greater than a rated power of the signal. In this embodiment of this application, the rated power of the signal may also be referred to as a rated value of the signal power.

As an example, the second information may further include indication information for the maximum overshoot power. The maximum overshoot power may be an overshoot amount of the signal power, or a sum of the overshoot amount of the signal power and the rated power. This is not limited herein. The overshoot amount of the signal power may be understood as a value by which the actual power of the signal sent by the network device to the terminal exceeds the rated power. It should be noted that a rule for setting the overshoot amount of the signal power may be determined according to an actual network design and requirement, which is not limited in this application.

As an example, a larger overshoot amount may be allocated to a CC that is closer to the center frequency of the communication bandwidth. A CC that is closer to the center frequency of the communication bandwidth may be understood as a CC that is closer to the center frequency of the communication bandwidth in terms of the distance between the center frequency and the center frequency of the communication bandwidth. Therefore, the overshoot amount of the signal power on the CC of the terminal is different when the CC of the terminal is located at different positions in the communication bandwidth.

It should be noted that, because capabilities of the terminals are different, the number of CCs that can be used by the terminal may be one or more, that is, the number of CCs of the terminal may be one or more. For example, if the frequency domain resource composed of black blocks and white blocks in FIG. 6 is set as a CC of the terminal, and if each frequency domain resource composed of three blocks represents one CC, the number of CCs of the terminal is considered to be two; or if each frequency domain resource composed of two blocks represents one CC, the number of CCs of the terminal is considered to be three. Therefore, the power aggregation resource indicated by each power aggregation mode may be located within a CC, or may be located between a plurality of CCs. That the power aggregation resource is located between a plurality of CCs may be understood as that the power aggregation resource indicated by the power aggregation mode is distributed on a plurality of CCs.

As an example, the maximum overshoot power may be an overshoot amount of the signal power corresponding to each power aggregation mode, that is, an overshoot amount of the signal power sent by the network device to the terminal on the power aggregation resource indicated by the power aggregation mode. When there are a plurality of CCs of the terminal and the power aggregation resource indicated by the power aggregation mode is located between the plurality of CCs, the same or different maximum overshoot power may be allocated to power aggregation resources located on different CCs, which is not specifically limited herein.

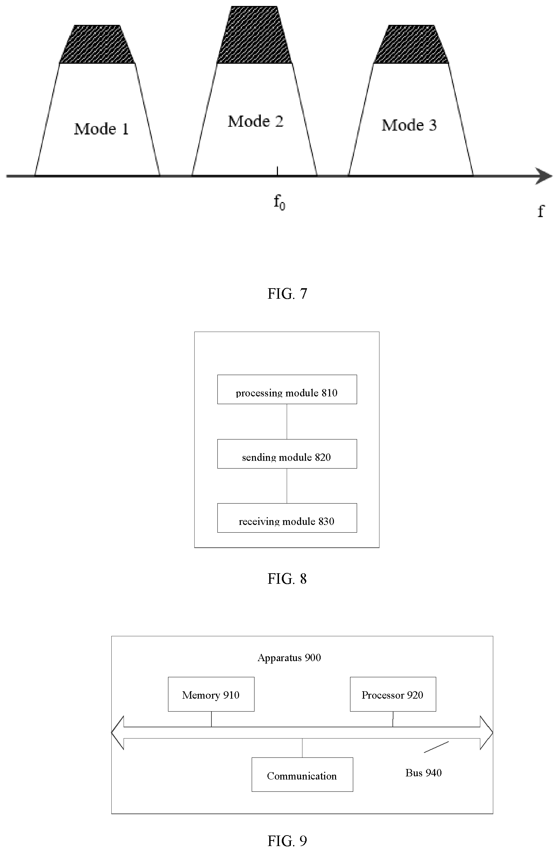

FIG. 7 is a schematic illustrative diagram of overshoot amounts in power aggregation modes according to an embodiment of this application. FIG. 7 shows signal power corresponding to three power aggregation modes, for example, signal power corresponding to a power aggregation mode 1, a power aggregation mode 2, and a power aggregation mode 3, where f ₀ is a center frequency of a communication bandwidth. The white blocks may be understood as rated values of the signal power corresponding to each power aggregation mode, and it can be seen that the rated values of the signal power corresponding to each power aggregation mode are the same. The shaded blocks may be understood as overshoot amounts of the signal power corresponding to each power aggregation mode. It should be noted that mode 1 in FIG. 7 represents the power aggregation mode 1, mode 2 represents the power aggregation mode 2, and mode 3 represents the power aggregation mode 3.

As shown in FIG. 7, if the frequency domain location of the power aggregation resource indicated by the power aggregation mode 2 is closer to f ₀, the overshoot amount of the signal power corresponding to the power aggregation mode 2 may be greater than the overshoot amounts of the signal power corresponding to the power aggregation mode 1 and the power aggregation mode 3.

As an example, when the power aggregation resource indicated by the power aggregation mode is located between a plurality of CCs, the second information may further include indication information about a location of the power aggregation resource indicated by each power aggregation mode in the CC of the terminal. The information may be used to indicate a start location of the power aggregation resource in the CC of the terminal. The terminal may determine, based on the indication information about the location of the power aggregation resource indicated by each power aggregation mode in the CC of the terminal, the start location of the power aggregation resource in the CC of the terminal, and determine, based on a granularity of resource elements of the power aggregation resource, a quantity of resource elements included in the power aggregation resource, thereby determining a location distribution of all resource elements included in the power aggregation resource in the CC of the terminal.

In some implementations, at least one power aggregation mode may be predefined by a protocol. In this implementation, the second information may include only an index of the at least one power aggregation mode. The terminal may determine the at least one power aggregation mode based on the index of the at least one power aggregation mode.

In some implementations, the second information is further used to configure a measurement manner and/or a reporting manner for the channel measurement result. As an example, the second information may include measurement configuration information. For example, the second information includes a measurement reporting configuration (report configuration) and/or a measurement resource configuration (resource configuration).

In this implementation, the terminal may determine, based on the measurement resource configuration, what resources need to be measured, and determine, based on the measurement reporting configuration, how to perform measurement and reporting.

As an example, the network device may send the second information to the terminal through radio resource control (radio resource control, RRC) signaling.

S502: The terminal determines first information, where the first information is used to determine a first power aggregation resource, the first power aggregation resource is used to aggregate power of a signal sent by the network device to the terminal, and the first power aggregation resource is some frequency domain resources in the CC of the terminal.

In this embodiment, after receiving the second information, the terminal may determine, based on the second information, the channel quality corresponding to each power aggregation mode. A method for measuring channel quality by the terminal is not specifically limited in this application. For example, the terminal may determine, based on the measurement resource configuration, a resource to be measured, and determine, by means of measurement reporting configuration, how to perform measurement, so as to measure the channel quality of the received signal on the power aggregation resource indicated by each power aggregation mode, thereby determining the channel measurement result corresponding to each power aggregation mode.

As an example, the network device may send a pilot signal (for example, a channel state information-reference signal (channel state information-reference signal, CSI-RS)) on the power aggregation resource indicated by the power aggregation mode, so that the terminal may measure channel quality of receiving a CSI-RS on the power aggregation resource, thereby determining a channel measurement result corresponding to the power aggregation mode.

As an example, the network device may send a pilot signal (for example, a CSI-RS) on a CC of the terminal, so that the terminal may measure channel quality of receiving the CSI-RS on the CC of the terminal, and therefore may determine a channel measurement result of receiving the CSI-RS on the CC of the terminal. The terminal may determine, based on the channel measurement result of receiving the CSI-RS on the CC of the terminal and the power aggregation resource indicated by the power aggregation mode, the channel measurement result corresponding to the power aggregation mode. When the signal power can be over-transmitted, the terminal may further consider the over-transmitted amount of the signal power when determining, based on the channel measurement result of receiving the CSI-RS on the CC of the terminal and the power aggregation resource indicated by the power aggregation mode, the channel measurement result corresponding to the power aggregation mode, thereby improving measurement accuracy of the channel measurement result corresponding to the power aggregation mode.

As an example, the channel measurement result may include one or more of the following: a rank indication (rank indication, RI), a precoding matrix indicator (precoding matrix indicator, PMI), a CQI, a SINR, an RSRP, or reference signal received quality (reference signal received quality, RSRQ).

As an example, after determining the channel measurement result corresponding to each power aggregation mode, the terminal may determine the first power aggregation mode from at least one power aggregation mode based on the channel quality measurement result. The first power aggregation resource may be some frequency domain resources in the CC of the terminal, or the first power aggregation resource may be one or more resource elements in the CC of the terminal. The network device may aggregate the power of the signal sent by the network device to the terminal to the first power aggregation resource. It should be understood that the first power aggregation mode is included in the at least one power aggregation mode, and the first power aggregation mode indicates the first power aggregation resource.

As an example, the channel measurement result of the received signal on the first power aggregation resource meets the channel quality threshold. For example, the CQI of the received signal on the first power aggregation resource is greater than a CQI threshold.

As an example, if the at least one power aggregation mode is predefined in a protocol, the terminal may directly perform S502 and S503 without performing S501, thereby saving signaling overheads. For example, the terminal may determine, based on the at least one predefined power aggregation mode and by using the default measurement configuration information for channel measurement, the channel quality corresponding to each power aggregation mode. In some embodiments, the measurement configuration information for channel measurement may also be predefined in the protocol or preconfigured in the terminal in advance, which is not limited herein.

S503. The terminal sends first information to the network device.

In this embodiment, after determining the first power aggregation mode, the terminal may send the first information to the network device. For example, the terminal may determine a reporting manner based on a measurement reporting configuration, so as to report the first information to the network device.

As an example, the first information may include an index of the first power aggregation mode and/or a channel measurement result of a received signal on the first power aggregation resource. Correspondingly, the network device may receive the first information, and determine the first power aggregation mode based on the first information, so as to determine the first power aggregation resource.

As an example, the first information may include a channel measurement result corresponding to each of at least one power aggregation mode. After receiving the first information, the network device may determine, based on the channel measurement result corresponding to each power aggregation mode, a power aggregation mode corresponding to a channel measurement result that meets a channel quality threshold as the first power aggregation mode, so as to determine the first power aggregation resource.

As an example, the first information may include indication information indicating whether signal power overshooting can be performed in each of at least one power aggregation mode and/or an overshooting amount when signal power overshooting is performed in each power aggregation mode.

As an example, after receiving the first information, the network device may further determine the first power aggregation mode based on information such as a capability of the terminal. This is not specifically limited herein.

For example, the terminal may perform reporting by using a physical uplink control channel (physical uplink control channel, PUCCH), or may perform reporting by using uplink control information (uplink control information, UCI), or a media access control-control element (media access control -control element, MAC-CE), or RRC signaling.

In this embodiment, the network device may predefine at least one power aggregation mode, and the terminal may measure channel quality corresponding to each power aggregation mode, and send first information to the network device. The first information may include an index of the first power aggregation mode and/or a channel measurement result corresponding to the first power aggregation mode, so that the network device may configure a corresponding power aggregation scheme based on the first power aggregation mode or configure downlink transmission information for the terminal. In the method provided in this embodiment, the network device may determine the first power aggregation mode from at least one power aggregation mode based on the channel measurement result feedback of the terminal, and concentrate the radio frequency power to the first power aggregation resource indicated by the first power aggregation mode, where the first power aggregation resource is a frequency domain resource whose channel quality meets a channel quality threshold, thereby significantly improving a network experience of a user and increasing a data rate of the terminal. In addition, in this embodiment of this application, the signal power may be over-issued according to an actual requirement, so that the data rate of the terminal can be better improved. The radio frequency power may be understood as power of a signal sent by the network device to the terminal.

In some application scenarios, the network device may initiate power aggregation after receiving the request information sent by the terminal. For example, when a user uses the terminal to attempt to watch video content, but the current download rate of the terminal is insufficient to support smooth playback of the video content, the terminal may send the request information to the network device to request triggering of power aggregation, so that the terminal can obtain a higher transmission power or better signal quality to meet a quality of service requirement of the terminal. Therefore, the method in FIG. 5 may further include S510. For example, S510 is performed before S501, that is, before the network device sends the second information to the terminal.

S510: The terminal sends third information to the network device, where the third information is used to request power aggregation.

In this embodiment, when the downlink transmission rate of the terminal or the channel quality cannot meet the quality of service requirement, the terminal may send the third information to the network device to request the network device to initiate power aggregation, thereby improving the downlink transmission rate or the channel quality of the terminal. Correspondingly, the network device may receive the third information.

As an example, the terminal may send the third information through UCI, MAC-CE, or RRC signaling.

In some implementations, the terminal may further send fourth information to the network device, where the fourth information indicates a power aggregation mode supported by the terminal. Correspondingly, the network device may receive the fourth information.

As an example, the fourth information may include an index of a power aggregation mode supported by the terminal. The power aggregation mode supported by the terminal may be a power aggregation mode autonomously determined by the terminal. For example, the terminal may determine, from at least one power aggregation mode, a power aggregation mode that the terminal wants to measure, and send the power aggregation mode to the network device through the fourth information.

In some embodiments, the fourth information may further include a cell for which measurement is requested and/or a beam for which measurement is requested, so that the network device may configure, for the terminal based on the fourth information, a measurement manner and/or a reporting manner for the channel measurement result.

As an example, the third information and the fourth information may be carried in a same message for sending, or may be carried in different messages for sending, which is not limited herein.

It should be understood that the network device may perform S501 after receiving the third information or the fourth information, so as to configure at least one power aggregation mode for the terminal.

In this embodiment, after receiving the request sent by the terminal, the network device may initiate power aggregation, thereby effectively increasing the data transmission rate of the terminal and meeting the quality of service requirements of the terminal.

This application provides a more advanced and flexible power aggregation method/mechanism. In the technical solutions provided in this application, at least one power aggregation mode may be predefined, or the network device may configure at least one power aggregation mode for the terminal, so that the terminal can determine a channel measurement result corresponding to each of the at least one power aggregation mode, and determine the first power aggregation mode from the at least one power aggregation mode based on the channel measurement result corresponding to each power aggregation mode. In addition, the terminal can evaluate the potential impact of different power aggregation modes on the data rate of the terminal, for example, evaluate whether overshooting of signal power can be performed for each power aggregation mode. The terminal may report the determined first power aggregation mode to the network device, so that the network device can adjust the power allocation policy more accurately based on the information reported by the terminal, and overshooting of signal power can be achieved to some extent, thereby more effectively improving the data rate of the terminal and improving user experience. In the technical solutions provided in this application, the terminal can determine the first power aggregation mode based on the channel condition of the terminal and report the first power aggregation mode to the network device, so that the power allocation policy configured by the network device for the terminal better meets the needs of the terminal, thereby achieving personalized optimization for the terminal. The network device can more effectively implement allocation of radio frequency resources based on the information reported by the terminal, thereby improving spectrum utilization. An optimized power allocation policy can provide users with more stable and high-quality communication services. The technical solutions provided in this application enhance the adaptability and efficiency of the network, provide personalized quality of service optimization, and ultimately promote an improvement in the performance of the entire wireless communications network.

FIG. 8 is a schematic structural diagram of a communications apparatus according to an embodiment of this application. As shown in FIG. 8, the apparatus 800 may include a processing module 810, a sending module 820, and a receiving module 830.

In a possible implementation, the apparatus 800 may be configured to implement the steps/operations performed by the terminal in the method shown in FIG. 4 or FIG. 5.

For example, when the apparatus 800 is configured to implement the method performed by the terminal in FIG. 4, the processing module 810 may be configured to implement S401, and the sending module 820 may be configured to implement an operation performed by the terminal in S402.

For example, when the apparatus 800 is configured to implement the method performed by the terminal in FIG. 5, the processing module 810 may be configured to implement S502; the sending module 820 may be configured to implement an operation performed by the terminal in S510 and S503; and the receiving module 830 may be configured to implement an operation performed by the terminal in S501.

In a possible implementation, the apparatus 800 may be configured to implement the steps/operations performed by the network device in the method shown in FIG. 4 or FIG. 5.

For example, when the apparatus 800 is configured to implement the method implemented by the network device in FIG. 4, the receiving module 830 may be configured to implement the operation performed by the network device in S402.

For example, when the apparatus 800 is configured to implement the method implemented by the network device in FIG. 5, the sending module 820 may be configured to implement the operation performed by the network device in S501, and the receiving module 830 may be configured to implement the operations performed by the network device in S510 and S503.

FIG. 9 is a schematic structural diagram of a communications apparatus according to another embodiment of this application. The apparatus 900 shown in FIG. 9 may be configured to implement the method performed by the terminal or the network device in any one of the foregoing embodiments.

As shown in FIG. 9, the apparatus 900 in this embodiment includes a memory 910, a processor 920, a communications interface 930, and a bus 940. The memory 910, the processor 920, and the communications interface 930 implement communication connections between each other through the bus 940.

The memory 910 may be a read-only memory (read only memory, ROM), a static storage device, a dynamic storage device, or a random access memory (random access memory, RAM). The memory 910 may store a program. When the program stored in the memory 910 is executed by the processor 920, the processor 920 is configured to perform the steps performed by the terminal or the network device in the method shown in FIG. 4 or FIG. 5.

The processor 920 may be a general-purpose central processing unit (central processing unit, CPU), a microprocessor, an application-specific integrated circuit (application-specific integrated circuit, ASIC), or one or more integrated circuits, and is configured to execute a related program, to implement the communication method shown in the method embodiments of this application.

The processor 920 may alternatively be an integrated circuit chip that has a signal processing capability. In an implementation process, the steps of the communication method shown in the method embodiments of this application may be implemented by using an integrated logic circuit of hardware in the processor 920 or instructions in a form of software.

The processor 920 may alternatively be a general-purpose processor, a digital signal processor (digital signal processing, DSP), an application-specific integrated circuit (application-specific integrated circuit, ASIC), a field programmable gate array (field programmable gate array, FPGA) or another programmable logic device, a discrete gate or transistor logic device, or a discrete hardware component, and can implement or perform the methods, steps, and logical block diagrams disclosed in the embodiments of this application. The general-purpose processor may be a microprocessor, or the processor may be any conventional processor or the like.

The steps of the method disclosed in embodiments of this application may be directly performed by a hardware decoding processor, or may be performed by a combination of hardware and software modules in the decoding processor. The software module may be located in a mature storage medium in this field, such as a random access memory, a flash memory, a read-only memory, a programmable read-only memory, an electrically erasable programmable memory, or a register. The storage medium is located in the memory 910. The processor 920 reads information in the memory 910 and completes, in combination with hardware, a function that needs to be performed by the units included in the communication apparatus in this application. For example, the processor 920 may perform each step/function performed by the terminal or the network device in the method shown in FIG. 4 or FIG. 5.

Optionally, the memory 910 and the processor 920 may be integrated together.
The communication interface 930 may use, but is not limited to, a transceiver or the like to implement a transceiver device, to implement communication between the apparatus 900 and another device or apparatus.
The bus 940 may include a path for transmitting information between the components (for example, the memory 910, the processor 920, and the communication interface 930) of the apparatus 900.

Some embodiments of this application also provide a computer program product, which, when run on a processor, can implement the methods illustrated in the foregoing embodiments. Some embodiments of this application also provide a computer-readable storage medium, which includes computer instructions. When the computer instructions are run on a processor, the methods illustrated in the foregoing embodiments can be implemented.

It should be noted that the modules or components shown in the foregoing embodiments may be one or more integrated circuits configured to implement the methods described above, for example, one or more application-specific integrated circuits (ASICs), one or more microprocessors (digital signal processors, DSPs), or one or more field programmable gate arrays (FPGAs). For another example, when a module is implemented in the form of a processing element invoking program code, the processing element may be a general-purpose processor, such as a central processing unit (CPU), or another processor, such as a controller, that can invoke program code. For yet another example, these modules may be integrated together and implemented in the form of a system on a chip (SOC).

In the foregoing embodiments, the embodiments may be implemented entirely or partially by software, hardware, firmware, software modules, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

The term "a plurality of" in this specification means two or more than two. The term "and/or" in this specification describes only an association relationship between associated objects, and represents that three relationships may exist. For example, A and/or B may represent the following three cases: only A exists, both A and B exist, and only B exists. In addition, the character "/" in this specification generally indicates an "or" relationship between associated objects; and in a formula, the character "/" indicates a "division" relationship between associated objects. In addition, it should be understood that the terms such as "first" and "second" in this specification are merely used for distinguishing and description purposes, and should not be understood as indicating or implying relative importance, or should not be understood as indicating or implying a sequence.

It may be understood that the various numbers used in embodiments of this application are merely for differentiation for ease of description, and are not intended to limit the scope of embodiments of this application.

It may be understood that the sequence numbers of the foregoing processes in embodiments of this application do not mean an execution sequence. The execution sequence of the processes should be determined according to functions and internal logic of the processes, and should not constitute any limitation on the implementation processes of embodiments of this application.

## Claims

1. A communication method, wherein the method is applied to a terminal, and the method comprises:
determining first information, wherein the first information is used to determine a first power aggregation resource, the first power aggregation resource is used to aggregate power of a signal sent by a network device to the terminal, and the first power aggregation resource is some frequency domain resources in component carriers of the terminal;
sending the first information to the network device.

2. The method according to claim 1, wherein the first power aggregation resource being some frequency domain resources in component carriers of the terminal comprises:
The first power aggregation resource is one or more resource elements in a component carrier of the terminal, and the resource element is a resource block, a resource block group, a resource element, a partial bandwidth BWP, a subband, or a resource element group.

3. The method according to claim 1 or 2, wherein the first information comprises an index of a first power aggregation mode and/or a channel measurement result of a received signal on the first power aggregation resource, and the first power aggregation mode indicates the first power aggregation resource.

4. The method according to claim 3, wherein a channel measurement result of a received signal on the first power aggregation resource meets a channel quality threshold.

5. The method according to claim 3 or 4, wherein the method further comprises:
receiving second information from the network device, wherein the second information is used to configure the first power aggregation mode.

6. The method according to claim 5, wherein the second information comprises an index of the first power aggregation mode and/or a granularity of a resource element of the first power aggregation resource.

7. The method according to claim 6, wherein the first power aggregation resource comprises all resource elements on a first half bandwidth of the component carrier, all resource elements on a second half bandwidth of the component carrier, odd resource elements on an entire bandwidth of the component carrier, or even resource elements on the entire bandwidth of the component carrier.

8. The method according to claim 5 or 6, wherein the second information comprises indication information for a maximum overshoot power and/or indication information for a location of the first power aggregation resource in the component carrier.

9. The method according to any one of claims 5 to 8, wherein the second information is further used to configure a measurement manner and/or a reporting manner of the channel measurement result.

10. The method according to any one of claims 5 to 9, wherein the method further comprises:
sending third information to the network device, wherein the third information is used to request power aggregation.

11. The method according to any one of claims 5 to 10, wherein the method further comprises:
sending fourth information to the network device, wherein the fourth information indicates a power aggregation mode supported by the terminal.

12. A communication method, wherein the method is applied to a network device, and the method comprises: receiving first information from a terminal, wherein the first information is used to determine a first power aggregation resource, the first power aggregation resource is used to aggregate power of a signal sent by the network device to the terminal, and the first power aggregation resource is some frequency domain resources in a component carrier of the terminal;
sending a signal to the terminal based on the first information.

13. The method according to claim 12, wherein the first power aggregation resource is some frequency domain resources in a component carrier of the terminal, and
the first power aggregation resource is one or more resource elements in a component carrier of the terminal, wherein the resource element is a resource block, a resource block group, a resource element, a partial bandwidth BWP, a subband, or a resource element group.

14. The method according to claim 12 or 13, wherein the first information comprises an index of a first power aggregation mode and/or a channel measurement result of a received signal on the first power aggregation resource, and the first power aggregation mode indicates the first power aggregation resource.

15. The method according to claim 14, wherein a channel measurement result of a received signal on the first power aggregation resource meets a channel quality threshold.

16. The method according to claim 14 or 15, wherein the method further comprises:
sending second information to the terminal, wherein the second information is used to configure the first power aggregation mode.

17. The method according to claim 16, wherein the second information comprises an index of the first power aggregation mode and/or a granularity of resource elements of the first power aggregation resource.

18. The method according to claim 17, wherein the first power aggregation resource comprises all resource elements on a first half bandwidth of the component carrier, all resource elements on a second half bandwidth of the component carrier, odd resource elements on an entire bandwidth of the component carrier, or even resource elements on an entire bandwidth of the component carrier.

19. The method according to claim 16 or 17, wherein the second information comprises indication information for a maximum overshoot power and/or indication information for a location of the first power aggregation resource in the component carrier.

20. The method according to any one of claims 16 to 19, wherein the second information is further used to configure a measurement manner and/or a reporting manner of the channel measurement result.

21. The method according to any one of claims 16 to 20, wherein the method further comprises:
receiving third information from the terminal, wherein the third information is used to request power aggregation.

22. The method according to any one of claims 16 to 21, wherein the method further comprises:
Sending fourth information to the network device, wherein the fourth information indicates the power aggregation mode supported by the terminal.

23. A communication apparatus, comprising various functional modules configured to implement the method according to any one of claims 1 to 11 or any one of claims 12 to 22.

24. A communication apparatus, comprising: a processor, wherein the processor is coupled to a memory, the memory is configured to store a computer program, and when the processor invokes the computer program, the apparatus is caused to perform the method according to any one of claims 1 to 11 or any one of claims 12 to 22.

25. A computer program product, comprising computer program code, wherein when the computer program code is run on a computer, the computer is caused to implement the method according to any one of claims 1 to 11 or any one of claims 12 to 22.

26. A computer-readable medium, wherein the computer-readable medium stores program code executable by a computer, the program code comprising instructions for performing the method according to any one of claims 1 to 11 or any one of claims 12 to 22.
